**Europäisches Patentamt**

**European Patent Office**

**Office européen des brevets**

(11) Publication number: **0 049 960**
**B1**

(12) **EUROPEAN PATENT SPECIFICATION**

(45) Date of publication of patent specification: **18.03.87**

(51) Int. Cl.⁴: **F 16 L 27/04**

(21) Application number: **81304280.1**

(22) Date of filing: **17.09.81**

(54) **Swivel coupling element.**

(30) Priority: **14.10.80 US 196527**
**08.06.81 US 271114**

(43) Date of publication of application:
**21.04.82 Bulletin 82/16**

(45) Publication of the grant of the patent:
**18.03.87 Bulletin 87/12**

(84) Designated Contracting States:
**DE FR GB NL SE**

(56) References cited:
**DE-A-2 737 621**
**DE-C- 261 434**
**GB-A-1 097 267**
**US-A-3 477 748**
**US-A-4 012 060**

(73) Proprietor: **HUNTING OILFIELD SERVICES LIMITED**
**10 Bancroft Road**
**Reigate Surrey RH2 7RP (GB)**

(72) Inventor: **Dopyera, Emil E.**
**7826 Zilonis Court**
**Houston Texas 77041 (US)**
Inventor: **Miller, Jack E.**
**9202 Long Barrel**
**Houston Texas 77040 (US)**

(74) Representative: **Jennings, Guy Kenneth et al**
**GILL JENNINGS & EVERY 53-64 Chancery Lane**
**London WC2A 1HN (GB)**

Courier Press, Leamington Spa, England.

## Description

This invention relates to a swivel coupling element and more specifically, to such a coupling element for use in sealingly coupling a tubular element to an annular coupling flange.

Various types of swivel couplings are known for use in coupling tubular elements in sealed relationship. While swivel couplings may be used for coupling tubular elements which are in line, swivel couplings find particular utility in coupling tubular elements which are mis-aligned.

The usual types of swivel couplings all comprise an annular coupling flange connected to one of the tubular elements to be coupled, and having a bore which diverges towards the open end to define a concave recess for the reception of a part-spherical configuration at the end of the other tubular element to be coupled. An annular retainer flange which co-operates with the part-spherical configuration can be bolted to the coupling flange to complete the coupling and fix the leading end of the tubular element in the recess of the coupling flange.

A material disadvantage of such previous swivel couplings is that the leading end of the tubular element requires axial translation to draw the leading end axially into the concave recess of the coupling flange. This is a significant disadvantage where the swivel coupling is used in difficult or hazardous environments such as in connection with tubular elements in the form of marine pipelines and particularly sub-sea pipelines. In forming such a coupling, due allowance must therefore be made in the piping for axial displacement of the piping while the leading end of the tubular element is drawn into the recess of the coupling flange.

A further disadvantage is that because of the axial displacement required to draw the part-spherical configuration or ball of the leading end of the tubular element into the recess of the mounting flange, if the two tubular elements which are to be coupled by means of the coupling are mis-aligned, the degree of mis-alignment will change as axial displacement occurs during formation of the coupling. This can therefore have the effect of imposing a bending strain on the completed coupling itself, and on the connected tubular elements.

There is a particular disadvantage when marine pipelines having substantial diameters such as 1 to 2 metres (4 feet) or more are to be coupled in that the retainer flange which is loosely located on the leading end of the tubular element has a substantial mass. This makes it extremely difficult for a diver in a sub-sea environment to displace the retainer flange axially on the tubular element into a position where it is over the leading end of the tubular element for bolting onto the coupling flange on the other element.

The form of coupling disclosed in DE—A—2,737,621 and DE—C—261434 comprises an annular mounting flange having on one side a face for seating against the seating face of the annular coupling flange in the coupled position, and on the other side being shaped to define a segmental spherical surface, a tubular element having a leading end formed with a complementary segmental spherical surface co-operating with the spherical surface on the mounting flange to permit the tubular element to swivel relatively to the annular mounting flange, an annular retainer flange which is located on the tubular element and means for connecting the annular retainer flange to the annular coupling flange to prevent axial separation of the retaining and coupling flanges.

In other words, the concave surface for the reception of the complementary segmental spherical surface on the leading end of the tubular element is formed on a separate mounting flange rather than on the coupling flange as in the more usual type of coupling referred to above. This simplifies the construction of the coupling flange, but introduces a separate component, and from the point of view of the assembly of large marine pipelines, adds to the difficulties already mentioned.

According to this invention, a swivel coupling element of the same general type as defined in the pre-characterising part of claim 1, is characterised by connection means for connecting the annular retainer flange to the annular mounting flange to hold these two flanges together in an assembled relationship prior to their connection to the annular coupling flange, the latter connection means being such as to allow movement of the retainer and mounting flanges, after assembly together, between an unlocked position where the tubular element is free to swivel relatively to the mounting flange and a locked position to which the pre-assembled flanges are moved by connection of the annular retainer flange to the annular coupling flange, in which position the tubular element is fixed relatively to the mounting flange with the segmental spherical surfaces sealingly engaged with each other.

The assembly of the components thus takes place in two stages. Firstly, the retainer flange is connected to the mounting flange in the unlocked condition with the tubular member in position between them and then the retainer flange is connected to the coupling flange in the normal way. In a marine application the first stage of the assembly can be carried out above the surface of the water. The pre-assembly of the retainer and mounting flanges greatly simplifies the coupling operation. In particular, these components may be aligned with the coupling flange while in the unlocked condition, and then subsequently locked in the aligned position. It is then a straight forward operation to connect the retainer flange to the coupling flange, normally by means of bolts, thus completing the locking together of the retainer flange and the mounting flange. For marine pipelines, the pre-assembly means that there are no separate, loose components for the diver to handle.

The connection means between the annular

retainer flange and the annular mounting flange is preferably positively connected to one of these two flanges and slidably connected to the other of the two flanges. This allows limited relative axial displacement of the flanges so as to facilitate movement between the locked and unlocked positions. Most simply the connection means is in the form of bolts which extend slidably through holes in one of the flanges and are engaged in threaded bores in the other of the flanges.

In order to form a sealed engagement between the segmental spherical surfaces of the mounting flange and the leading end of the tubular element respectively when the retainer and mounting flanges are drawn into locking engagement with the leading end of the tubular element, annular seal means may be provided between the complementary spherical surfaces and wiper rings may also be located between the respective segmental spherical surfaces so as to protect the annular seal means before the tubular element is fixed relatively to the annular mounting flange.

In order to assist in the relative movement of the annular retainer flange and the annular mounting flange into the unlocked position, resilient spacer means are preferably provided between these two flanges which then maintain the flanges in spaced relationship to facilitate displacement of the tubular element relatively to the mounting flange. When the connection means between the two flanges is in the form of bolts, the spacer means conveniently comprises spacer springs located on the respective bolts. Until the connection means are tightened up to bring the two flanges into their relative locked position, the springs or other form of spacer means maintain the required spacing, but during tightening up the spacer means are compressed against the effect of their resilience so as to allow the movement to take place.

Swivel coupling elements in accordance with this invention can be made of various sizes depending upon the size of tubular element to be coupled. Thus, for example, the swivel coupling elements of this invention may be made in any size ranging from about 50 mm (2 inches) to about 1.2 mm (48 inches), or in any size ranging from about 1.3 mm (52 inches) to about 2.5 mm (96 inches) or more in diameter.

The swivel coupling elements of this invention may be made of conventional materials which are appropriate for the intended application and environment of the invention during use. Thus, for example, for use in subsea environments, the swivel coupling element, and swivel coupling of this invention will be made of materials which are in accord with the ANSI or the API standards, as required.

Preferred embodiments of the invention are now described by way of example with reference to the accompanying drawings.

In the drawings:

Figure 1 shows an axial section of one embodiment of a swivel coupling element in accordance with this invention which is coupled to a conventional annular coupling flange;

Figure 2 shows an axial section of an alternative embodiment of a swivel coupling in accordance with this invention which is again coupled to a conventional annular coupling flange.

Figure 3 shows an axial section of yet a further embodiment of a swivel coupling in accordance with this invention which is again coupled to a conventional annular coupling flange to constitute a swivel coupling in accordance with this invention.

Figure 4 shows an axial section of yet a further embodiment of a swivel coupling element in accordance with this invention, with the coupling element being shown in a position where it is coupled to a conventional annular coupling flange (shown in dotted lines).

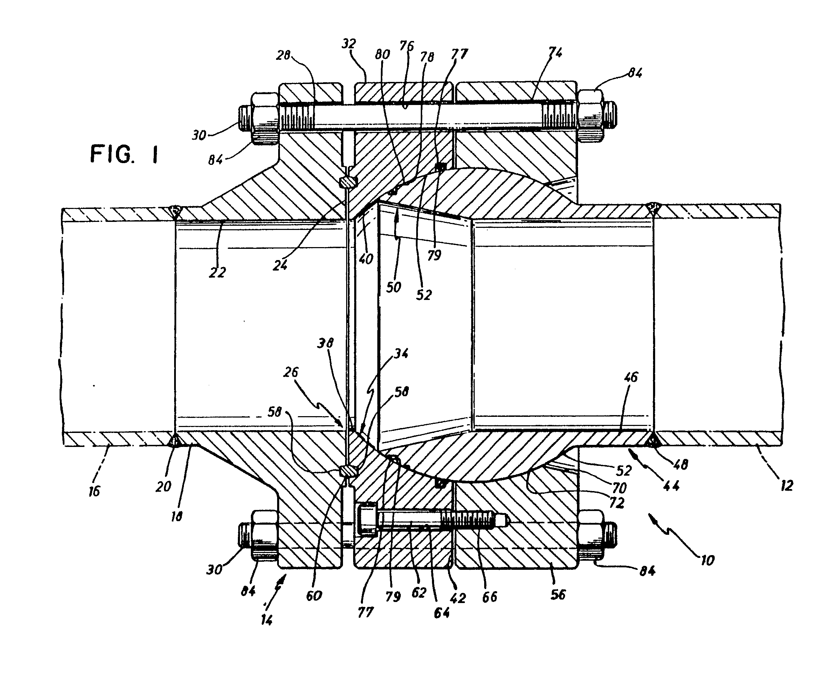

With reference to Figure 1 of the drawings, reference numeral 10 refers generally to a swivel coupling element for use in sealingly coupling a first tubular element 12 (as shown in dotted lines in Figure 1), to an annular coupling flange 14 of conventional type.

The annular coupling flange 14 is shown in the drawing as connected to a second tubular element 16 in the form of a marine pipeline (again shown in dotted lines).

The conventional annular coupling flange 14 has a trailing end 18 which is bevelled for welding to the second tubular element 16 by means of a weld 20 in accordance with conventional techniques.

The annular coupling flange 14 further has a bore 22, a raised annular seating face 24 at its leading end 25, and a plurality of circumferentially spaced stud holes 28.

Figure 1 shows threaded studs 30 extending through the stud holes 28.

The swivel coupling element 10 in accordance with this invention comprises an annular mounting flange 32 having a leading end 34 which defines a seating face 36 for seating on the seating face 24 of the annular coupling flange 14.

The annular mounting flange 32 has a bore 38 which extends from its leading end 34 and which diverges outwardly away from the leading end 34 to define a concave segmental spherical surface 40 which is directed towards the trailing end 42 of the mounting flange 32.

The swivel coupling element 10 further comprises a tubular member 44 having a trailing end 46 which, as shown in the drawing, is connected to the first tubular element 12 in the form of a marine pipeline, such as by welding as at 48.

The tubular member 44 has a leading end 50 which is pivotally positioned in the bore 38 of the mounting flange 32, the leading end 50 having a convex segmental spherical outer surface 52 which is complementary to the concave surface 40 to cooperate therewith.

The surface 52 thus cooperates with the surface 40 so that the tubular member 44 can be pivotally displaced relatively ·to the mounting flange 32 about its own axis, and so that the tubular member 44 can be pivotally displaced relatively to the mounting flange 32 to vary the inclination between the axis of the tubular member 44 and the axis of the mounting flange 32.

The swivel coupling element 10 further comprises an annular retainer flange 56 which is located on the tubular member 44 and which is axially displaceable relatively to the mounting flange between an unlocked position (the position shown in Figure 1) where the tubular member 44 is free to pivot relatively to the mounting flange 32, and a locked position where the leading end of the tubular member is fixed in the bore 38 of the mounting flange 32.

The seating face 36 of the mounting flange 32 is a raised annular seating face corresponding to the seating face 24. Each of the seating faces 24 and 36 has an annular groove 58 wherein a metal seating ring 60 of conventional type is provided to provide a sealing engagement between the mounting flange 32 and coupling flange 14 when they are coupled together.

The retainer flange 56 is connected to the mounting flange 32 by means of bolts 62 which extend slidably through holes 64 in the mounting flange 32, and which are tapped into threaded bores 66 provided in the retainer flange 56.

Thus, as shown in Figure 1 of the drawings, the retainer flange 56 is located axially relatively to the mounting flange 32 to hold the leading end 50 of the tubular member 44 captive within the bore 38 of the mounting flange while, at the same time, permitting the tubular member 44 to swivel relatively to the mounting flange 32 to vary the inclination between its axis and the axis of the mounting flange 32, and to permit the tubular member 44 to swivel about its own axis relatively to the mounting flange 32.

Because the bolts 62 are slidably located in the holes 64, the retainer flange 56 can be axially displaced towards the mounting flange 32 from its unlocked position as shown in Figure 1 to its locked position where it engages with the outer surface 52 of the tubular member 44 to fix the leading end 50 in the bore 38 of the mounting flange 32. Thus further swiveling or pivotal action of the tubular member 44 will be prevented and the completed coupling will be capable of transmitting bending and tensile loads.

The retainer flange 56 has a bore 70 which diverges outwardly towards the leading end 50 of the tubular member 44 to define a concave segmental spherical gripping surface 72 for gripping the surface 52 of the leading end 50 when the retainer flange 56 is in its locked position.

The gripping surface 72 is conveniently roughened to provide a firm gripping engagement.

The retainer flange 56 is provided with circumferentially spaced stud holes 74 which are arranged in a corresponding manner to the stud holes 28 to cooperate with the threaded studs 30. Likewise, the mounting flange 32 is provided with correspondingly arranged stud holes 76.

The tubular member 44 is provided with a pair of annular grooves 77 and 78 in its outer surface 52 proximate the leading end 50, while the bore 38 of the mounting flange 32 is provided with an annular groove 77 in the surface 40 proximate its trailing end. An annular metal O-ring 80 is located in the groove 78 to provide a sealing engagement between the outer surface 52 and the concave surface 40 when the leading end 50 is fixed in position in the mounting flange 32. Wiper rings 79 are located in the two annular grooves 77.

In use, for coupling a first tubular element 12 in the form of a pipeline section to a conventional annular coupling flange 14 which is coupled to a second tubular element 16 which may be in the form of a pipeline section or other tubular component, the swivel coupling element 10 having its leading end 50 held captive in the bore 38 of the mounting flange 32 by means of the retainer flange 56 in its unlocked position, will have its trailing end 46 connected to the first tubular element 12 by, for example, welding. Thereafter the swivel coupling element can be displaced to align it with the annular coupling flange 14. The retainer flange 56 and mounting flange 32 may then be pivotally displaced about the axis of the tubular member 44 to align the stud holes 74 and 76 with the stud holes 28.

During alignment of the swivel coupling element 10 with the annular coupling flange 14, the leading end 50 of the tubular member 44 can swivel in the concave segmental spherical recess defined by the mounting flange 32 and retainer flange 56 to accommodate misalignment between the first tubular element 12 and the second tubular element 16.

The threaded studs 30 are then threaded through the aligned stud holes, whereafter nuts can be tightened on the studs 30 to draw the mounting flange 32 into sealing engagement with the annular coupling flange 14 and, at the same time, to draw the retainer flange 56 axially towards the mounting flange 32 until the retainer flange 56 is in its locked position where its gripping surface 72 engages firmly with the convex outer surface 52 of the tubular member 44 to complete the coupling.

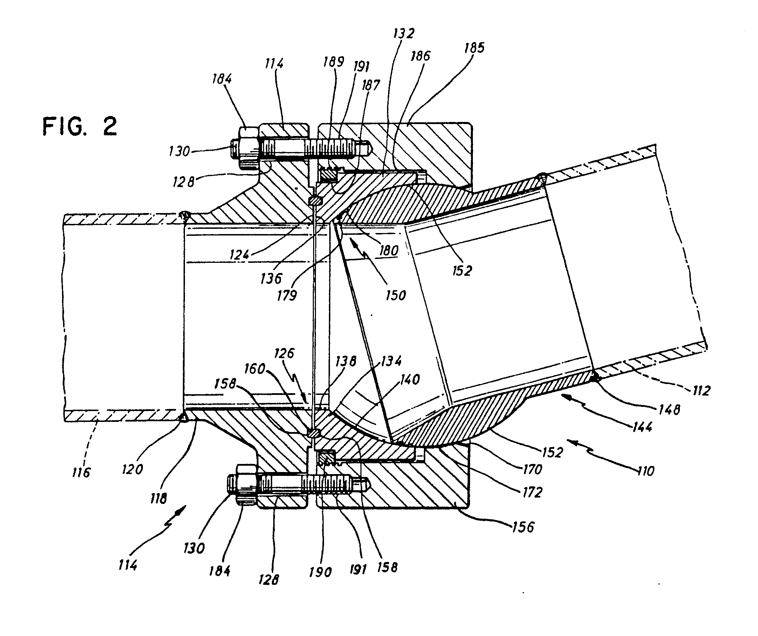

With reference to Figure 2 of the drawings, reference numeral 110 refers generally to an alternative embodiment of a swivel coupling element in accordance with this invention.

The swivel coupling element 110 corresponds substantially with the swivel coupling element 10. Corresponding parts are therefore indicated by corresponding reference numerals except that the suffix "1" is used before each numeral.

In the swivel coupling 110 the retainer flange 156 has a tubular portion 185 which extends axially therefrom towards the annular coupling flange 114. Further, the annular mounting flange 132 has a cylindrical outer surface which is slidably receivable within the tubular portion 185 of the retainer flange 156.

The mounting flange 132 further has an annular recess 187 which defines a radially extending annular shoulder 188.

The tubular portion 185 of the retainer flange 156 has an internally threaded zone 189, and the swivel coupling element 110 includes a threaded retainer ring 190 which is engaged with the threaded portion 189 and abuts the shoulder 188 thereby locating the mounting flange 132 axially relatively to the retainer flange 56, and thereby holding the leading end 150 of the tubular member 144 captive in the bore 138 of the mounting flange 132.

As shown in Figure 2 of the drawings, the retainer flange 156 is in its unlocked position where the leading end 150 of the tubular member 144 is free to swivel in the bore 138 of the mounting flange 132.

The swivel coupling 110 includes a plurality of circumferentially spaced, threaded stud holes 191 which are arranged in a corresponding manner to the stud holes 128 of the annular coupling flange 114. Studs 130 are engaged in the threaded stud holes 191 and extend slidably through the stud holes 128 of the annular coupling flange 114.

For completing the swivel coupling 110, the studs 130 are threaded through the stud holes 128, whereafter nuts 184 are tightened onto the studs 130 to draw the seating faces 136 and 124 into sealing engagement and, at the same time, to displace the retainer flange 156 axially relatively to the mounting flange 132 towards the annular coupling flange 114 so that the gripping surface 172 engages with the convex outer surface 152 of the tubular member 144 to again fix it in its correct attitude in the swivel coupling element 110, whereupon the swivel coupling so formed in capable of resisting tensile and bending stresses.

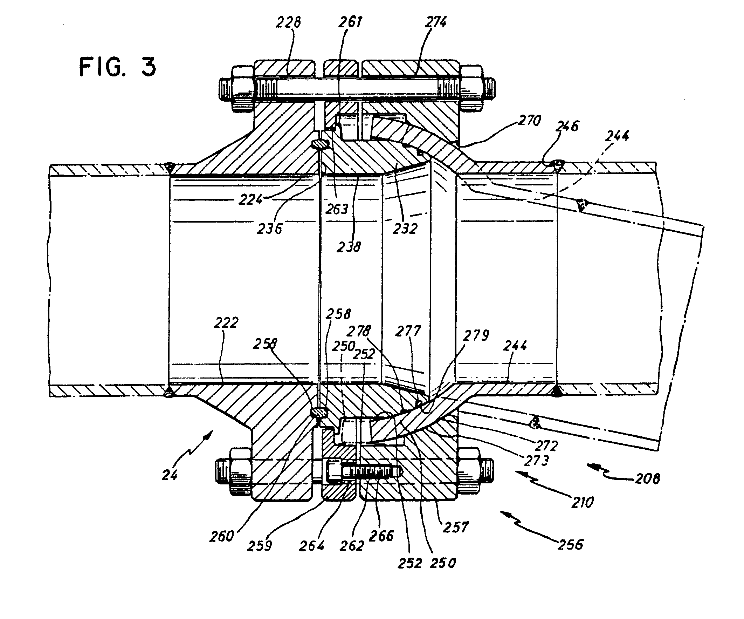

With reference to Figure 3 of the drawings, reference numeral 208 refers generally to a swivel coupling in accordance with this invention, comprising a swivel coupling element 210 and an annular coupling flange 214 which is coupled thereto.

The swivel coupling element 210 and the annular coupling flange 214 correspond generally with the swivel coupling element 10 and annular coupling flange 14 of Figure 1. Corresponding parts are therefore indicated by corresponding reference numerals except that the prefix "2" has been used before the reference numerals.

In the embodiment illustrated in Figure 3 of the drawings, the segmental spherical surface 240 of the mounting flange 232 is defined by an outer surface 240 of the mounting flange, while the complementary segmental spherical surface 252 of the tubular member 244 is defined by the bore of the tubular member 244 diverging outwardly towards its leading end 250 to define a concave segmental spherical surface at its leading end within which the mounting flange 232 is received so that the segmental spherical surfaces 240 and 252 can cooperate in a similar manner as discussed with reference to the swivel coupling element 10 of Figure 1.

In this embodiment of the invention the retainer flange 256 comprises a trailing section 257 and a leading section 259 which are connected together to permit limited axial displacement between them.

The leading section 259 is so connected to the trailing section 257 by means of bolts 262 which extend slidably through holes 264 provided in the leading section 259, and which are engaged in circumferentially spaced threaded bores 266 provided in the trailing section 257.

The trailing section 257 has a bore 270 which diverges outwardly towards the leading end of the trailing section 257 to define a concave segmental spherical gripping surface 272 which is, roughened for gripping the outer surface 273 of the leading end 250 of the tubular member 244 when the retainer flange 256 is in its locked position.

Because the leading end 250 of the tubular member 244 has a constant wall thickness, the outer surface 273 of the leading end 250 will have a convex segmental spherical surface corresponding to the surface 252 for engagement by the gripping surface 272.

As shown in Figure 3 of the drawings, when the retainer flange 256 is in its unlocked position, the tubular member 244 can be swiveled between a position as shown in solid lines where its axis in is line with the axis of the mounting flange 232, and a position as shown in dotted lines in which its axis is inclined to the axis of the mounting flange through an angle of approximately 15 degrees.

The leading section 259 of the retainer flange 256 is engaged with the mounting flange 232 to thereby locate the retainer flange 256 relatively to the mounting flange 232 and hold the leading end 250 in a captive position between the retainer flange 256 and the mounting flange 232.

The leading section 259 is engaged with the mounting flange 232 by the mounting flange 232 having a radially extending annular lip 261 which engages with a radially inwardly extending annular lip 263 of the leading section 259.

In use, for completing the swivel coupling 208 with the tubular member 244 connected to one tubular element and with the trailing end of the annular coupling flange 214 connected to a second tubular element, the swivel coupling element 210 can be displaced onto the annular coupling flange 214 for the seating surfaces 236 and 224 to seat. During such displacement the tubular member 244 will swivel relatively to the mounting flange 232 to accommodate any misalignment between the tubular elements being connected.

Threaded studs can then be threaded through the stud holes 228 and 274 which are, as before, provided at circumferentially spaced intervals. Nuts can then be tightened upon the threaded studs [not shown in Figure 3] to draw the trailing section 257 towards the leading section 259 and towards the annular coupling flange 214 until the gripping surface 272 engages firmly with the surface 273 to provide a sealing engagement between the surfaces 240 and 252 and thus complete the swivel coupling 208.

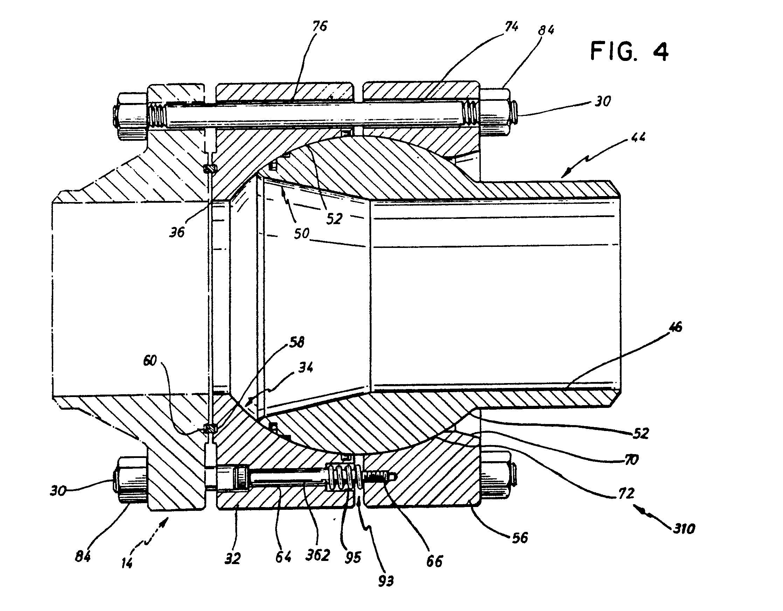

With reference to Figure 4 of the drawings, reference 310 refers generally to an alternative embodiment of a swivel coupling element in accordance with this invention.

The swivel coupling element 310 corresponds substantially with the swivel coupling element 10 of Figure 1. Corresponding parts of the swivel coupling element 310 are therefore identified with corresponding reference numerals to those used in Figure 1 of the drawings.

The swivel coupling element 310 differs from the swivel coupling element 10 of Figure 1, in that the element 310 includes spacer means which is operative while the retainer flange 56 is in its unlocked position to facilitate rotation and swivel motion of the tubular member 44 relatively to the annular mounting flange 32 before the retainer flange 56 is displaced into its locked position.

The spacer means is operative between the mounting flange 32 and the retainer flange 56, and is in the form of resilient bias means 93.

The bias means 93 comprises a plurality of spacer springs 93 which are located on preloading bolts 362 which extend slidably through holes 64 in the mounting flange 32, and which are threaded into threaded bores 66 provided in the retainer flange 56.

Each hole 64 has a counter sunk bore 95 for housing the spacer spring 93.

In use, the preloading bolts 362 are tensioned against the spacer springs 93 to thereby capture the leading end 50 of the tubular member 44 with a controlled degree of friction within the mounting flange 32 and the retainer flange 56. In other words, the leading end 50 of the tubular element 44 is located in the coupling element 310 so that the convex segmental spherical outer surface 52 of the leading end 50 engages frictionally with the concave surfaces 40 and 72.

By simply adjusting the preloading bolts 362 and thus the compression of the spacer springs 93, the spacing between the mounting flange 32 and retainer flange 56 will be adjusted to adjust the frictional cooperation between the surface 52 and the complementary surfaces 40 and 72.

This arrangement provides the advantage that the frictional cooperation can readily be controlled to permit displacement of the tubular member 44 relatively to the flanges 32 and 56, whether it be a rotational displacement or a swivel displacement, under a desired degree of force.

The controlled frictional engagement will thus ensure that a particular orientation of the tubular element 44 relatively to the flanges 32 and 56 can be maintained during final handling of the coupling element 310 and during alignment thereof with the conventional annular coupling flange 14.

Once the nuts 84 have been tightened on the threaded studs 30, the spacer springs 93 will be accommodated in the counter sunk bores 95. They will therefore not interfere with the makeup of a coupling from the coupling element 310.

The embodiments of the invention as illustrated in the drawings provide the particular advantages that the swivel coupling element incorporates the swivel mechanism, that the mounting flange and retainer flange are located on the leading end of the tubular member with the leading end held captive therein, that the swivel coupling element can be coupled to any conventional annular coupling flange having a matching seating face, that effective seals can readily be effected, and that any swivel action to accommodate misalignment can readily be accommodated.

It will be appreciated that, if desired, conventional hydraulic means may be incorporated in the swivel coupling element to swivel the tubular member relatively to the mounting flange for alignment of the stud holes, and to couple the swivel coupling element to the annular coupling flange.

**Claims**

1. A swivel coupling element for use in sealingly coupling a tubular element to an annular coupling flange and comprising an annular mounting flange (32, 123, 232) having on one side a face for seating against the seating face of the annular coupling flange in the coupled position, and on the other side being shaped to define a segmental spherical surface (40, 140, 240), a tubular element (44, 144, 244) having a leading end formed with a complementary segmental spherical surface (52, 152, 252) co-operating with the spherical surface (40, 140, 240) on the mounting flange (32, 132, 232) to permit the tubular element (44, 144, 244) to swivel relatively to the annular mounting flange (32, 132, 232), an annular retainer flange (56, 156, 256) which is located on the tubular element (44, 144, 244) at the side of the mounting flange remote from the coupling flange and means (30, 84, 130, 184) for connecting the annular retaining flange to the annular coupling flange (14, 114, 214) to prevent axial separation of the retaining and coupling flanges, characterised by connection means (62, 190, 262, 362) for connecting the annular retainer flange (56, 156, 256) to the annular mounting flange (32, 132, 232) to hold these two flanges together in an assembled relationship prior to their connection to the annular coupling flange (14, 114, 214), the latter connection means (62, 190, 262, 362) being such as to allow movement of the retainer and mounting flanges, after assembly together, between an unlocked position where the tubular element (44, 144, 244) is free to swivel relatively to the mounting flange (32, 132, 232) and a locked position to which the pre-assembled flanges are moved by connection of the annular retainer flange to the annular coupling flange, in which position the tubular element (44, 144, 244) is fixed relatively to the mounting flange (32, 132, 232) with the segmental spherical surfaces (40, 140, 240, 52, 152, 252) sealingly engaged with each other.

2. A swivel coupling element according to claim 1 characterised in that the connection means (62, 190, 262, 362) which connects the annular retainer flange (56, 156, 256) to the annular mounting flange (32, 132, 232) is positively connected to one of these two flanges and is slidably connected to the other of the two flanges to allow limited relative axial displacement of the flanges.

3. A swivel coupling element according to claim 2 characterised in that the connection means is in the form of bolts (62, 262, 362) which extend slidably through holes (64) in one of the flanges (32, 56) and are engaged in threaded bores (66) provided in the other of the flanges (56, 32).

4. A swivel coupling element according to claim 1 characterised in that the retainer flange (156) is connected to the mounting flange (132) by means of a retainer ring (190) which is mounted on the retainer flange (156) and engages with a radially extending shoulder (188) of the mounting flange (132).

5. A swivel coupling element according to any one of the preceding claims, characterised in that it includes annular seal means (80, 180, 278) between the segmental spherical surface (40, 140, 240) of the mounting flange (32, 132, 232) and the segmental spherical surface (52, 152, 252) of the leading end of the tubular element (44, 144, 244) to form a sealed engagement between them when the retainer and mounting flanges are drawn into locking engagement with the leading end of the tubular element and also wiper rings (79, 179, 277) which are also located between the segmental spherical surface (40, 140, 240) of the mounting flange (32, 132, 232) and the complementary segmental spherical surface (52, 152, 252) of the leading end (50, 150, 250) of the tubular element (44, 144, 244) to protect the annular seal means before the tubular element is fixed relatively to the annular mounting flange.

6. A swivel coupling element according to any one of claims 1 to 5 in which the segmental spherical surface (240) of the mounting flange (232) comprises an outer convex surface of the mounting flange (232) and the complementary segmental spherical surface (252) of the tubular element (244) comprises a bore of the tubular element which diverges outwardly towards its leading end (250) to define a concave segmental spherical surface (252) at its leading end (250) characterised in that the retainer flange (256) comprises a trailing section (257) and a leading section (259) which are connected together to permit limited axial displacement between them, in that the leading section (259) is engaged with the mounting flange (232), and in that the bore (270) of the trailing section (257) diverges outwardly towards the leading end of the trailing section to define a concave gripping surface (272) for gripping the outer surface (273) of the leading end (250) of the tubular element (244) when the trailing section of the retainer flange (256) is drawn into locking engagement with the leading end (250) of the tubular element (244).

7. A swivel coupling element according to any one of claims 1 to 6, characterised in that it includes resilient spacer means (93) which is operative between the mounting flange (32) and the retainer flange (56) to maintain them in spaced relationship while the retainer flange (56) is in its unlocked position to facilitate displacement of the tubular element (44) relatively to the mounting flange (32).

8. A swivel coupling element according to claim 3 together with claim 7, characterised in that the spacer means (93) comprises spacer springs located on the respective bolts (362).

## Patentansprüche

1. Schwenkkupplungselement zum abdichtenden Ankuppeln eines rohrförmigen Elements an einem ringförmigen Kupplungsflansch, mit einem ringförmigen Sitzflansch (32, 123, 232), welcher an einer Seite eine im angekuppelten Zustand an der Sitzfläche des ringförmigen Kupplungsflanschs in Anlage bringbare Fläche und an der anderen Seite eine Kugelsegmentfläche (40, 140, 240) aufweist, einem rohrförmigen Element (44, 144, 244) mit einer an einem vorderen Ende geformten komplementären Kugelsegmentfläche (52, 152, 252), welche mit der Kugelfläche (40, 140, 240) am Sitzflansch (32, 132, 232) zusammenwirkt, um ein Verschwenken des rohrförmigen Elements (44, 144, 244) relativ zum ringförmigen Sitzflansch (32, 132, 232) zu ermöglichen, einem ringförmigen Halteflansch (56, 156, 256), welcher an der dem Kupplungsflansch abgewandten Seite des Sitzflanschs auf dem rohrförmigen Element (44, 144, 244) angeordnet ist, und mit Einrichtungen (30, 84, 130, 184) zum Verbinden des ringförmigen Halteflanschs mit dem ringförmigen Kupplungsflansch zum Verhindern einer axialen Trennung des Halteflanschs vom Kupplungsflansch, gekennzeichnet durch Verbindungseinrichtungen (62, 190, 262, 362) zum Verbinden des ringförmigen Halteflanschs (56, 156, 256) mit dem ringförmigen Sitzflansch (32, 132, 232) zum Zusammenhalten der beiden Flansche im zusammengebauten Zustand vor ihrer Verbindung mit dem ringförmigen Kupplungsflansch (14, 114, 214), wobei die letzteren Verbindungseinrichtungen (62, 190, 262, 362) so ausgebildet sind, daß sie nach dem Zusammenbau des Halteflanschs und des Sitzflanschs eine Bewegung derselben zwischen einer Lösestellung, in welcher das rohrförmige Element (44, 144, 244) relativ zum Sitzflansch (32, 132, 232) frei verschwenkbar ist, und einer Festsetzstellung ermöglichen, in welche die vormontierten Flansche durch Verbinden des ringförmigen Halteflanschs mit dem ringförmigen Kupplungsflansch gebracht werden und in welcher das rohrförmige Element (44, 144, 244) relativ zum Sitzflansch (32, 132, 232) fixiert ist, während sich die Kugelsegmentflächen (40, 140, 240, 52, 152, 252) abdichtend in gegenseitiger Anlage befinden.

2. Schwenkkupplungselement nach Anspruch 1, dadurch gekennzeichnet, daß die den ringförmigen Halteflansch (56, 156, 256) mit dem ringförmigen Sitzflansch (32, 132, 232) verbindenden Verbindungseinrichtungen (62, 190, 262, 362) fest mit einem der beiden Flansche und verschieblich mit dem anderen der beiden Flansche verbunden sind, um eine begrenzte axiale Bewegung der Flansche relativ zueinander zu ermöglichen.

3. Schwenkkupplungselement nach Anspruch 2, dadurch gekennzeichnet, daß die Verbindungseinrichtungen in Form von Schrauben (62, 262, 362) vorliegen, welche Löcher (64) in einem der Flansche (32, 56) gleitverschieblich durchsetzen und mit im anderen der Flansche (56, 32) vorgesehenen Gewindebohrungen (66) in Eingriff stehen.

4. Schwenkkupplungselement nach Anspruch 1, dadurch gekennzeichnet, daß der Halteflansch (156) mit dem Sitzflansch (132) durch einen Haltering (190) verbunden ist, welcher auf dem Halteflansch (156) montiert ist und sich mit einer sich radial erstreckenden Schulter (188) des Sitzflanschs (132) in Eingriff befindet.

5. Schwenkkupplungselement nach einem der vorstehenden Ansprüche, dadurch gekennzeichnet, daß es ringförmige Dichtungseinrichtungen (80, 180, 280) zwischen der Kugelsegmentfläche (40, 140, 240) des Sitzflanschs (32, 132, 232) und der Kugelsegmentfläche (52, 152, 252) am vorderen Ende des rohrförmigen Elements (44, 144, 244) aufweist, welche beim Anziehen des Halteflanschs und des Sitzflanschs in Halteeingriff mit dem vorderen Ende des rohrförmigen Elements eine Abdichtung dazwischen bilden, und daß zwischen der Kugelsegmentfläche (40, 140, 240) des Sitzflanschs (32, 132, 232) und der komplementären Kugelsegmentfläche (52, 152, 252) am vorderen Ende (50, 150, 250) des rohrförmigen Elements (44, 144, 244) ferner Wischerringe (79, 179, 277) für den Schutz der ringförmigen Dichtungseinrichtungen vor dem Fixieren des rohrförmigen Elements relativ zum ringförmigen Sitzflansch angeordnet sind.

6. Schwenkkupplungselement nach einem der Ansprüche 1 bis 5, bei welcher die Kugelsegmentfläche (240) des Sitzflanschs (232) eine äußere konvexe Oberfläche des Sitzflanschs (232) umfaßt und die komplementäre Kugelsegmentfläche (252) des rohrförmigen Elements (244) eine Bohrung des rohrförmigen Elements umfaßt, welche zu seinem vorderen Ende hin auswärts divergiert, um am vorderen Ende (250) eine konkave Kugelsegmentfläche (252) zu bilden, dadurch gekennzeichnet, daß der Halteflansch (256) ein hinteres Teil (257) und ein vorderes Teil (259) aufweist, welche so miteinander verbunden sind, daß sie begrenzt in axialer Richtung relativ zueinander bewegbar sind, daß das vordere Teil (259) sich mit dem Sitzflansch (232) in Eingriff befindet und daß die Bohrung (270) des hinteren Teils (257) auf das vordere Ende des hinteren Teils zu auswärts divergiert, um eine konkave Angriffsfläche (272) zu bilden, welche an der Außenfläche (273) des vorderen Endes (250) des rohrförmigen Elements (244) angreift, wenn das hintere Teil des Halteflanschs (256) in Halteeingriff mit dem vorderen Ende (250) des rohrförmigen Elements (244) angezogen wird.

7. Schwenkkupplungselement nach einem der Ansprüche 1 bis 6, dadurch gekennzeichnet, daß es elastische Abstandshaltereinrichtungen (93) aufweist, welche zwischen dem Sitzflansch (32) und dem Halteflansch (56) wirksam sind, um sie in gegenseitigem Abstand zu halten, wenn sich der Halteflansch in der Lösestellung befindet, um die Bewegung des rohrförmigen Elements (44) relativ zum Sitzflansch (32) zu erleichtern.

8. Schwenkkupplungselement nach Anspruch 3 in Verbindung mit Anspruch 7, dadurch gekennzeichnet, daß die Abstandshaltereinrichtungen (93) auf den jeweiligen Bolzen (362) angeordnete Abstandshalterfedern aufweisen.

**Revendications**

1. Elément d'accouplement pivotant utilisable pour relier de façon étanche un élément tubulaire à une bride annulaire d'accouplement et comprenant une bride annulaire de fixation (32, 132, 232) ayant sur un côté une face pour s'appuyer contre une face d'appui de la bride annulaire d'accouplement dans la position accouplée, et dont l'autre côté est profilé pour définir une surface en forme de segment sphérique (40, 140, 240), un élément tubulaire (44, 144, 244) ayant une extrémité avant formée avec une surface complémentaire en forme de segment sphérique (52, 152, 252) coopérant avec la surface sphérique (40, 140, 240) de la bride de fixation (32, 132, 232) pour permettre à l'élément tubulaire (44, 144, 244) de pivoter par rapport à la bride annulaire de fixation (32, 132, 232), une bride annulaire de retenue (56, 156, 256) qui est placée sur l'élément tubulaire (44, 144, 244) sur le côté de la bride de fixation éloigné de la bride d'accouplement et des moyens (30, 84, 130, 184) pour relier la bride annulaire de retenue à la bride annulaire d'accouplement (14, 114, 214) afin d'éviter l'écartement axial des brides de retenue et d'accouplement, caractérisé par le fait qu'il comprend des moyens de connexion (62, 190, 262, 362) pour connecter la bride annulaire de retenue (56, 156, 256) à la bride annulaire de fixation (32, 132, 232) afin de maintenir ces deux brides ensemble en une relation d'assemblage avant leur connexion à la bride annulaire d'accouplement (14, 114, 214), les derniers moyens de connexion (62, 190, 262, 362) étant tels qu'ils permettent le mouvement des brides de retenue et de fixation après leur assemblage, entre une position déverrouillée dans laquelle l'élément tubulaire (44, 144, 244) est libre de pivoter par rapport à la bride de fixation (32, 132, 232) et une position verrouillée dans laquelle les brides pré-assemblées sont déplacées par la connexion de la bride annulaire de retenue à la bride annulaire d'accouplement, position dans laquelle l'élément tubulaire (44, 144, 244) est fixe par rapport à la bride de fixation (32, 132, 232) avec les surfaces en forme de segment sphérique (40, 140, 240, 52, 152, 252) engagées de façon étanche ensemble.

2. Elément d'accouplement pivotant selon la revendication 1, caractérisé par le fait que les moyens de connexion (62, 190, 262, 362) qui relient la bride annulaire de retenue (56, 156, 256) à la bride annulaire de fixation (32, 132, 232) sont positivement reliés à l'une de ces deux brides et reliés de manière coulissante à l'autre des deux brides pour permettre un déplacement axial relatif limité des brides.

3. Elément d'accouplement pivotant selon la revendication 2, caractérisé par le fait que les moyens de connexion ont la forme de boulons (62, 262, 362) qui pénètrent de manière coulissante dans les trous (64) pratiqués dans l'une des brides (32, 56) et sont vissés dans des trous filetés (66) pratiqués dans l'autre des brides (56, 32).

4. Elément d'accouplement pivotant selon la revendication 1, caractérisé en ce que la bride de retenue (156) est reliée à la bride de fixation (132) au moyen d'une bague de retenue (190) qui est montée sur la bride de retenue (156) et vient en contact avec un épaulement s'étendant dans la direction axiale (188) de la bride de fixation (132).

5. Elément d'accouplement pivotant selon l'une quelconque des revendications précédentes, caractérisé par le fait qu'il comprend des moyens de joints annulaires (80, 180, 278) entre la surface en forme de segment sphérique (40, 140, 240) de la bride de fixation (32, 132, 232) et la surface en forme de segment sphérique (52, 152, 252) de l'extrémité avant de l'élément tubulaire (44, 144, 244) pour former un assemblage étanche entre elles lorsque les brides de retenue et de fixation sont amenées en assemblage de verrouillage avec l'extrémité avant de l'élément tubulaire et également des bagues de frottement (79, 179, 277) qui sont également placées entre la surface en forme de segment sphérique (40, 140, 240) de la bride de fixation (32, 132, 232) et la surface complémentaire en forme de segment sphérique (52, 152, 252) de l'extrémité avant (50, 150, 250) de l'élément tubulaire (44, 144, 244) afin de protéger les moyens d'étanchéité annulaires avant que l'élément tubulaire soit relié par rapport à la bride annulaire de fixation.

6. Elément d'accouplement pivotant selon l'une quelconque des revendications 1 à 5, dans lequel la surface en forme de segment sphérique (240) de la bride de fixation (232) comprend une surface extérieure convexe de la bride de fixation (232) et dans lequel la surface complémentaire en forme de segment sphérique (252) de l'élément tubulaire (244) comprend un alésage de l'élément tubulaire qui diverge vers l'extérieur en direction de son extrémité avant (250) afin de définir une surface concave en forme de segment sphérique (252) à son extrémité avant (250), caractérisé par le fait que la bride de retenue (256) comprend une section arrière (257) et uen section avant (259) qui sont reliées entre elles pour permettre un déplacement axial limité entre elles, par le fait que la section avant (259) est engagée avec la bride de fixation (232), et par le fait que l'alésage (270) de la section arrière (257) diverge vers l'extérieur en direction de l'extrémité avant de la section arrière pour définir une surface concave d'accrochage (272) destinée à accrocher la surface extérieure (273) de l'extrémité avant (250) de l'élément tubulaire (244) quand la section avant de la bride de retenue (256) est amenée en engagement de verrouillage avec l'extrémité avant (250) de l'élément tubulaire (244).

7. Elément d'accouplement pivotant selon l'une quelconque des revendications 1 à 6, caractérisé par le fait qu'il comprend des moyens d'écartement élastique (93) agissant entre la bride de fixation (32) et la bride de retenue (56) afin de les maintenir en relation d'espacement tandis que la bride de retenue (56) est dans sa position déverrouillée pour faciliter le déplacement de l'élément tubulaire (44) par rapport à la bride de fixation (32).

8. Elément d'accouplement pivotant selon la revendication 3 prise avec la revendication 7, caractérisé par le fait que les moyens d'espacement (93) comprennent des ressorts d'espacement placés sur les boulons respectifs (362).

FIG. 1

0 049 960

FIG. 2

0 049 960

2

FIG. 3

0 049 960

FIG. 4